# EUROPÄISCHE PATENTANMELDUNG

(11) **EP 2 151 672 A1**
(43) Veröffentlichungstag der Anmeldung: **10.02.2010**
(21) Anmeldenummer: 08014195.5
(22) Anmeldetag: 08.08.2008
(51) Int. Cl.: G01F 23/28, G01F 23/296

(54) **Verfahren zum Messen eines Füllstands oder Grenzstands, Füllstand- oder Grenzstandmessgeräte-Schaltung und Füllstand- oder Grenzstandmessgerät**

(71) Anmelder: VEGA Grieshaber KG, 77709 Wolfach (DE)
(72) Erfinder: Börsig, Jörg, 77776 Schapbach (DE); Fehrenbach, Josef, 77716 Haslach (DE); Mellert, Martin, 77790 Steinach (DE)
(74) Vertreter: Patentanwälte Westphal, Mussgnug & Partner

(57) **Zusammenfassung**

Die Erfindung bezieht sich auf ein Verfahren zum Messen eines Füllstands oder Grenzstands mit einem elektromagnetischen Schwingungssystem, bei dem ein Sendesignal (s) generiert wird, mittels des Sendesignals (s) ein Schwingkörper (2) elektromechanisch zu einer Schwingung angeregt wird und mittels eines nachfolgend von dem Schwingkörper (2) erzeugten Empfangssignals (e) das Sendesignal (s) für zumindest eine nachfolgende Anregung des Schwingkörpers (2) modifiziert wird, wobei aus dem Empfangssignal (e) eine Eigenfrequenz (fe) des Schwingkörpers (2) oder eine von der Eigenfrequenz (fe) abhängige Größe (te) bestimmt wird und damit das Sendesignal (s) modifiziert wird. Gegenstand sind außerdem eine Schaltung zum Durchführen des Verfahrens und ein entsprechendes Messgerät.

## Beschreibung

Die Erfindung bezieht sich auf ein Verfahren zum Messen eines Füllstands oder Grenzstands mit den oberbegrifflichen Merkmalen des Patentanspruchs 1, auf eine Füllstand- oder Grenzstandmessgeräte-Schaltung mit den oberbegrifflichen Merkmalen des Patentanspruchs 5 und auf ein Füllstand- oder Grenzstandmessgerät.

DE 102 03 461 A1 beschreibt eine Grenzstandmessgeräte-Schaltung mit einer Sendeschaltung, die zum Bereitstellen eines Sendesignals geschaltet ist, mit einem Schalter, der zum wahlweisen Anlegen oder Nicht-Anlegen des Sendesignals an zumindest einen Schwingkörperanschluss geschaltet ist, mit einer Empfangsschaltung, die zum Abgreifen eines Empfangssignals an den zumindest einen Schwingkörperanschluss geschaltet ist und mit einer Modifizierungsschaltung, die zum Modifizieren des Sendesignals abhängig von einem solchen zuvor empfangenen Empfangssignal zwischen die Empfangsschaltung und die Sendeschaltung geschaltet ist. Die Modifizierungsschaltung ist dabei derart ausgelegt, dass an den Schwingkörper, welcher am Schwingkörperanschluss angeschlossen ist, ein Sendesignal mit einer Vielzahl von aufeinanderfolgend verschiedenen Frequenzen angelegt wird. Das Empfangssignal, welches daraufhin gemessen wird, kann dann daraufhin untersucht werden, in welchem Maße die verschiedenen der Frequenzen gedämpft wurden.

Gemäß dem in diesem Dokument beschriebenen Stand der Technik waren zuvor Schaltungen bekannt, welche eine Rückkopplungsschleife mit einer rückgekoppelten Verstärkerschaltung aufweisen, um ein möglichst geeignetes Sendesignal für die Anregung des Schwingkörpers bereitstellen zu können.

Allgemein bekannt sind somit Schwingungsgrenzstandssensoren, welche eine Flüssigkeitsgabel mit induktivem Antrieb aufweisen. Der induktive Antrieb dient dabei in Form einer Spule gleichzeitig zum Anregen der Flüssigkeitsgabel als Sender als auch als Empfänger für von der Flüssigkeitsgabel empfangene Schwingungen. Anstelle eines induktiven Antriebes mit einer Spule ist auch der Einsatz eines piezoelektrischen Elementes als Sender und Empfänger bekannt.

Nachteilhaft sind bei allen derartigen Schaltungen der hohe konstruktive Aufwand und eine sehr aufwendige Signalverarbeitung. Insbesondere ist ein zusätzliches Empfangselement erforderlich, welches die empfangene Schwingung sowie die entsprechenden Temperaturen im Bereich der Schaltungsanordnung und des Schwingkörpers verarbeiten kann.

Die Aufgabe der Erfindung besteht darin, ein Verfahren zum Messen eines Füllstands oder Grenzstands, eine Füllstand- oder Grenzstandmessgeräte-Schaltung und ein Füllstand- oder Grenzstandmessgerät derart vorzuschlagen, dass ein einfacherer konstruktiver Aufbau und eine vereinfachte Ansteuerung ermöglicht werden.

Diese Aufgabe wird durch ein Verfahren zum Messen eines Füllstands oder Grenzstands mit den Merkmalen des Patentanspruchs 1, durch eine Füllstand- oder Grenzstandmessgeräte-Schaltung mit den Merkmalen des Patentanspruchs 5 und durch ein Füllstand- oder Grenzstandmessgerät mit einer solchen Schaltung und einem daran angeschlossenen Schwingkörper gelöst. Vorteilhafte Ausgestaltungen sind Gegenstand von abhängigen Ansprüchen.

Vorteilhaft wird ein Verfahren zum Messen eines Füllstands oder Grenzstands mit einem elektromagnetischen Schwingungssystem, bei dem ein Sendesignal generiert wird, mittels des Sendesignals ein Schwingkörper elektromechanisch zu einer Schwingung angeregt wird und mittels eines nachfolgend von dem Schwingkörper erzeugten Empfangssignals das Sendesignal für zumindest eine nachfolgende Anregung des Schwingkörpers modifiziert wird, wenn aus dem Empfangssignal eine Eigenfrequenz des Schwingkörpers oder eine von der Eigenfrequenz abhängige Größe bestimmt wird und damit das Sendesignal modifiziert wird.

Der Schwingkörper kann insbesondere ein piezoelektrisches Element oder ein induktives Element wie eine Spule sein.

Bevorzugt wird aus der Eigenfrequenz oder der von der Eigenfrequenz abhängigen Größe, z.B. einem dieser entsprechenden Taktdauer, eine neue Taktdauer eines Sendetakts oder eine neue Frequenz der Sendefrequenz des Sendesignals bestimmt. Dadurch kann das nachfolgend angelegte Sendesignal den Schwingkörper mit seiner Eigenfrequenz anregen.

Zum Bestimmen der Eigenfrequenz wird insbesondere das während einer Sendepause des Sendesignals gemessene Empfangssignal verwendet. Die Eigenfrequenz umfasst dann nur Schwingungsanteile der Eigenschwingung, da sie nicht über ein anliegendes Sendesignal gestört wird.

Eine Sendefrequenz des Sendesignals wird bevorzugt der Eigenfrequenz nachgeführt oder nachgeregelt. Mit anderen Worten soll das Sendesignal mit einer Sendefrequenz angelegt werden, welche möglichst genau der Eigenfrequenz des Schwingkörpers entspricht.

Außerdem bevorzugt wird eine Füllstand- oder Grenzstandmessgeräte-Schaltung mit einer Sendeschaltung, die zum Bereitstellen eines Sendesignals geschaltet ist, mit einem Schalter, der zum wahlweisen Anlegen oder Nicht-Anlegen des Sendesignals an zumindest einen Schwingkörperanschluss geschaltet ist, mit einer Empfangsschaltung, die zum Abgreifen eines Empfangssignals an den zumindest einen Schwingkörperanschluss geschaltet ist und mit einer Modifizierungsschaltung, die zum Modifizieren des Sendesignals abhängig von einem solchen zuvor empfangenen Empfangssignal zwischen die Empfangsschaltung und die Sendeschaltung geschaltet ist. Eine Eigenschwingungs-Bestimmungsanordnung bestimmt eine Eigenfrequenz eines anschließbaren Schwingkörpers oder eine von der Eigenfrequenz abhängige Größe aus dem Empfangssignal und eine Sendesignal-Modifizierungsanordnung ist ausgelegt, das Sendesignal abhängig von der Eigenfrequenz oder von der von der Eigenfrequenz abhängigen Größe zu modifizieren und bereitzustellen.

Die Schaltung bestimmt insbesondere aus der Eigenfrequenz oder aus der von der Eigenfrequenz abhängigen Größe eine neue Taktdauer eines Sendetakts oder eine neue Frequenz der Sendefrequenz des Sendesignals. Bevorzugt ist die Schaltung ausgelegt oder geschaltet, die Eigenfrequenz oder die von der Eigenfrequenz abhängige Größe aus dem während einer Sendepause des Sendesignals gemessenen Empfangssignal zu bestimmen. Insbesondere ist die Schaltung ausgelegt oder geschaltet, eine Sendefrequenz des Sendesignals der Eigenfrequenz nachzuführen oder nachzuregeln.

Die Komponenten der Schaltung können dabei alle oder einzeln aus Hardwarekomponenten oder aus softwaregesteuerten Komponenten wie einem Prozessor ausgebildet sein. Im Rahmen der vorliegenden Beschreibung wird unter dem Schwingungskörper im Wesentlichen das elektromagnetisch aktivierbare Element verstanden. Bei einer realistischen Umsetzung ist dieses elektromechanische Schwingungselement jedoch üblicherweise auch mit einem Schwingungsfühler in Form eines Festkörpers größerer Dimension verbunden, um diesen Schwingungsfühler zu einer Schwingung anzuregen bzw. um Schwingungen von diesem Körper zu empfangen. Vorteilhafterweise kann beim Einsatz eines induktiven Antriebs mit der gleichen Spule gesendet und empfangen werden. Das selbe Prinzip ist insbesondere auch mit einem piezoelektrischen Element möglich, welches abwechselnd als Sender oder Empfänger angesteuert wird.

Ein Grundgedanke des vorliegenden Konzeptes besteht somit darin, dass insbesondere zu Beginn bzw. vor Beginn von Messungen in ersten Schritten eine bestgeeignete Sendefrequenz des Sendesignals ermittelt wird. Vorteilhafterweise kann während des gesamten späteren Messzyklus eine fortwährende Überprüfung und gegebenenfalls Nachregelung der Sendefrequenz vorgenommen werden.

Ein Ausführungsbeispiel wird nachfolgend anhand der Zeichnung näher erläutert. Es zeigen:
- Fig. 1: Komponenten eines Füllstands- oder Grenzstandmessgeräts mit einer bevorzugten Schaltungsanordnung und
- Fig. 2: verschiedene Signalverläufe in einer solchen Anordnung, insbesondere bei Auswertung nur einer Halbwelle.

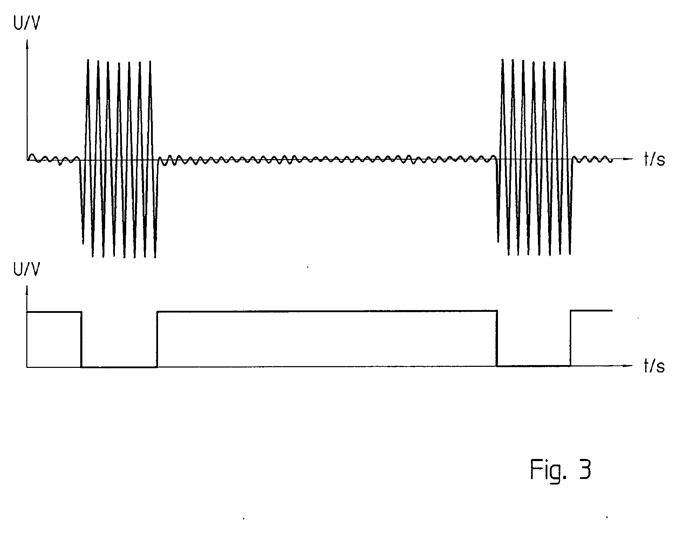

- Fig. 3: den Signalverlauf bei einer vorteilhaften Auswertung des vollständigen Wechselsignals Ue.

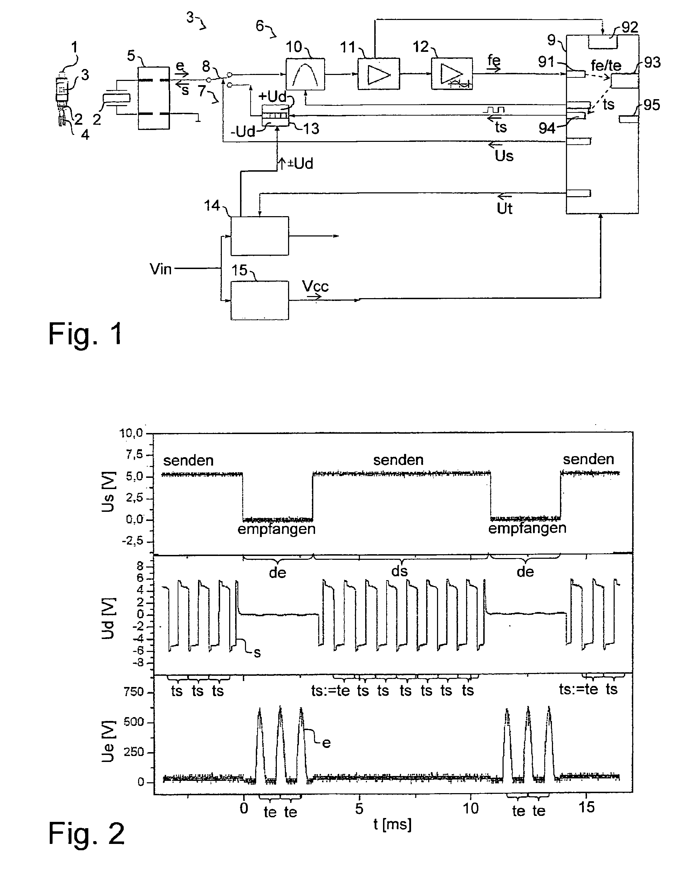

Wie aus Fig. 1 ersichtlich, besteht ein bevorzugtes Füllstand- oder Grenzstandmessgerät 1 aus einem Gehäuse, in dem ein Schwingkörper 2 vorderseitig aufgenommen ist, welcher mittels einer Schaltung 3 angeregt werden kann. Die Schaltung 3 dient zugleich dazu, vom Schwingkörper 2 empfangene Signale auszuwerten. Vorderseitig sitzt an dem Schwingkörper 2 ein Schwingungsfühler 4, welche als ein Festkörper zur Übertragung der Schwingungen des Schwingkörpers in ein Behältnis dient und welcher zugleich zum Empfangen von Schwingungen aus dem Behältnis und zu deren Übertragung auf den Schwingkörper 2 dient.

Der Schwingkörper 2 ist über einen Schwingkörperanschluss 5 an die Schaltung 3 gekoppelt. Optional kann der Schwingkörperanschluss 5 als eine Steckverbindung ausgestaltet sein. Prinzipiell ist aber auch eine feste Verbindung der Schaltung 3 mit dem Schwingkörper 2 beim Einbau in dem eigentlichen Messgerät möglich.

Die Schaltung 3 zeigt im Wesentlichen lediglich Komponenten, welche für das Verständnis für den konstruktiven Aufbau und die Verfahrensweise bei einer Signalverarbeitung gemäß dem besonders bevorzugten Konzept hilfreich sind. Die vorzugsweise zwei Anschlusskontakte des Schwingkörperanschlusses 5 sind ein Masse- bzw. Basisanschluss zum Anlegen einer Basisspannung bzw. einer Referenzspannung des Messgerätes sowie ein Signalanschluss, über welchen ein Sendesignal s bzw. ein Empfangssignal e übertragen werden.

An einen Ein- bzw. Ausgang der Schaltung 3, welcher mit dem Signalanschluss des Schwingungskörpers 2 verbindbar ist, ist ein Schalter 8 geschaltet, welcher den Schwingkörper 2 wahlweise mit einer Empfangsschaltung 6 oder einer Sendeschaltung 7 verbindet. Ein geeignetes Schaltsignal zum Schalten des Schalters 8 wird vorzugsweise von einem Prozessor 9 oder einer sonstigen geeigneten Schaltung bereitgestellt. Der Prozessor 9 ist bevorzugt als ein Mikrorechner ausgestaltet und dient als eine Modifizierungsschaltung.

Die Empfangsschaltung 6 besteht ausgehend vom Anschluss am Schalter 8 vorzugsweise aus einem Filter 10, welchem das Empfangssignal e angelegt wird, welches vom Schwingkörper 2 bereitgestellt wird. Die Filterparameter des Filters 10 sind vorzugsweise mittels des Prozessors geeignet einstellbar. Ein vom Filter 10 ausgegebenes gefiltertes Signal wird an einen Verstärker 11 angelegt, welcher zum Verstärken des gefilterten Signals dient.

Ein derart verstärktes Signal wird vom Verstärker 11 an einen Komparator 12 angelegt, welcher insbesondere zum Durchführen einer Nulldurchgangsbestimmung ausgestaltet ist. Dies ermöglicht eine Frequenzmessung des Empfangssignals e, um so eine Eigenfrequenz fe bestimmen zu können. Die Eigenfrequenz fe wird vom Komparator 12 an den Prozessor 9 angelegt. Insbesondere wird die Eigenfrequenz fe an eine Zeitsteuereinrichtung 91 angelegt, welcher insbesondere als Bestandteil eines derartigen Prozessors 9 ausgebildet sein kann.

Die Frequenz kann auch über FFT (Fast Fourier Transformation) bestimmt werden, indem das Signal direkt nach dem Filter bzw. ersten Verstärker per AD-Wandler eingelesen wird.

Außerdem wird von dem Verstärker 11 zur Messung der Amplitude des Empfangssignals e ein entsprechendes Messsignal an einen Analog-/Digital-Wandler 92 angelegt, welcher optional ebenfalls Bestandteil des Prozessors 9 sein kann. Über eine Schnittstelle 95 kann eine Kommunikation zu einer externen Einrichtung erfolgen, um z.B. Steueranweisungen zu empfangen oder Messdaten auszugeben.

Die Zeitsteuereinrichtung 91 kann vorzugsweise als eigene Komponente oder aber auch als Komponente einer übergeordneten Taktsteuerung 93 ausgestaltet sein. Außerdem ist ein Timer 94 vorgesehen, welcher ebenfalls als ein Bestandteil des Prozessors 9 bzw. einer entsprechenden Modifizierungseinrichtung als dem Prozessor 9 ausgebildet sein kann. Der Timer 94, welcher optional auch Bestandteil der Taktsteuerung 93 sein kann, dient zur Frequenzausgabe und insbesondere zum Ausgeben eines Taktsignals ts an eine Treiberstufe 13. Die Treiberstufe 13 stellt das Sendesignal s bereit, welches dem entsprechend geschalteten bzw. schaltbaren Anschluss des Schalters 8 angelegt wird.

Ein sogenannter Step-up-DC/DC-Wandler stellt eine Treiberspannung Ud bereit, welche insbesondere der Treiberstufe 13 angelegt wird. Entsprechend kann die Treiberstufe die positive Treiberspannung +Ud bzw. die negative Treiberspannung -Ud an den Schalter 8 anlegen. Versorgt wird der Step-up-DC/DC-Wandler 14 mit einer Versorgungsspannung Vin, welche vorzugsweise auch einem linearen Regler 15 angelegt wird. Dieser dient zur Bereitstellung einer positiven Versorgungsspannung Vcc, welche unter anderem zur Versorgung des Prozessors 9 bzw. der Modifizierungsschaltung dient. Von dem Prozessor 9 bzw. der Modifizierungsschaltung wird eine programmierbare Treiberspannung Ut vorzugsweise dadurch angesteuert, dass ein Ein-/Aus-Signal für den Step-up-DC/DC-Wandler 14 bereitgestellt und diesem angelegt wird.

Der Prozessor 9 bzw. die durch diesen mitgebildete Modifizierungsschaltung weist somit insbesondere eine Eigenschwingungs-Bestimmungsanordnung in Form des Komparators 12 und weiterer Komponenten auf, welche die Eigenschwingung bzw. Eigenfrequenz fe des Schwingkörpers 2 mit seinem Schwingungsfühler (4) bestimmen. Anstelle der direkten Bestimmung eines Werts der Eigenfrequenz fe kann natürlich auch eine davon abhängige Größe te bestimmt werden, wie z. B. eine Taktdauer eines von dem Schwingkörper 2 empfangenen Signals. Weiterhin weist die Modifizierungsschaltung eine Sendesignal-Modifizierungsanordnung auf, welche insbesondere den Timer 94 in Verbindung mit der Treiberstufe 13 umfasst. Der Timer 94 gibt das Taktsignal ts als einen Sendetakt aus, welcher einer neuen Taktdauer entspricht, welche zur Erzeugung des nachfolgenden Sendesignals s verwendet wird. Abhängig von dieser neuen Taktdauer stellt die Treiberstufe 13 entsprechend ein Sendesignal s bereit, welches mit geeignet abfolgenden Impulsen den Schwingkörper 2 zu seiner Eigenfrequenz fe anregt, wobei vorzugsweise die Resonanzfrequenz mit dem Sendesignal s an den Schwingkörper 2 übertragen wird.

Fig. 2 zeigt verschiedene Signalabläufe. Das obere dargestellte Signal entspricht einer Schaltspannung Us, welche insbesondere zum Schalten des Schalters 8 verwendet wird. Dargestellt sind Schaltzeiten zum Senden bzw. zum Empfangen, während derer der Schalter 8 den Schwingkörper 2 entweder mit der Treiberstufe 13 bzw. der Sendeschaltung 7 oder mit der Empfangsschaltung 6 bzw. dem Filter 10 verbindet. Erkennbar ist, dass eine Empfangsdauer de und eine Sendedauer ds so lang gewählt sind, dass diese vorzugsweise mehrere Perioden der Eigenfrequenz fe des Schwingkörpers 2 und den überdauern.

In dem mittleren Zeitdiagramm ist der zeitliche Verlauf der Sendespannung Ud als an den Schalter 8 und den Schwingkörper 2 angelegtes Sendesignal s skizziert. Auch wenn dies anhand der verwendeten Skalierung nicht erkennbar ist, variiert üblicherweise insbesondere bei Betriebsbeginn die Taktdauer der Sendetakte ts von einem Sendezyklus zum nächsten Sendezyklus. Innerhalb der jeweiligen Sendedauer ds eines Sendezyklus/eines der Sendezyklen bleibt die Taktdauer bzw. das Taktsignal ts der Sendetakte vorzugsweise konstant.

Das unterste Diagramm zeigt das Empfangssignal e bzw. dessen beispielhaft gleichgerichtet dargestellte Empfangsspannung Ue. Erkennbar sind während der Empfangsdauer de jeweils mehrere empfangene Signale, welche hinsichtlich ihrer Dauer der Eigenfrequenz fe des Schwingkörpers 2 mit seinem Schwingungsfühler 4 entsprechen. Bestimmbar ist somit insbesondere als abhängige Größe te die Dauer bzw. Taktdauer der empfangenen Signale. Diese kann verwendet werden, um die Taktdauer des Taktsignals ts des Sendetakts für den vorzugsweise bereits nächsten Sendezyklus entsprechend anzupassen, so dass das Sendesignal s den Schwingkörper 2 mit vorzugsweise seiner Eigenfrequenz anregt.

Bei einem entsprechenden Verfahrensablauf sendet der Prozessor 9 beispielsweise 100 Perioden mit einer beliebigen Frequenz an den Schwingkörper 2, welcher als Sender dient. Nach der Sendedauer dieser Anzahl von Perioden wird mittels des Schalters 8 auf einen Empfang umgeschaltet. Die Ausschwingfrequenz eines Schwingsystems ist stets die Eigenresonanz bzw. Eigenfrequenz fe und üblicherweise nicht die gesendete Frequenz. Ist die empfangene Amplitude des Empfangssignals e ausreichend groß, kann dessen Frequenz ermittelt werden, wobei die Frequenz der Eigenfrequenz fe entspricht. Nachfolgend wird die nächste Sendefrequenz als neue Sendefrequenz für das nachfolgende Sendesignal s entsprechend der derart ermittelten Eigenfrequenz fe festgelegt. Durch eine geeignete Regelung der Sendefrequenz kann die Schwingmechanik auf ihrer mechanischen Resonanzfrequenz betrieben werden.

Soweit von einer Anregung des Schwingkörpers 2 bzw. dessen Empfangssignal e gesprochen wird, ist in der Praxis stets auch der Schwingungsfühler 4 mit zu betrachten, da diese einen wesentlichen Einfluss auf die Schwingcharakteristik der Schwingmechanik hat. Bis die mechanische Resonanzfrequenz bzw. Schwingfrequenz durch den Einsatz geeigneter Suchalgorithmen gefunden ist, muss beim nachfolgenden Betrieb lediglich die Sendefrequenz je nach Bedarf nachgeführt werden. Durch ein variables Verhältnis zwischen Senden und Empfangen werden breitbandige Sendesignale generiert, welche zur Erregung eines schmalbandigen Systems erforderlich sind.

## Patentansprüche

1. Verfahren zum Messen eines Füllstands oder Grenzstands mit einem elektromagnetischen oder piezoelektrischen Schwingungssystem, bei dem
- ein Sendesignal (s) generiert wird,
- mittels des Sendesignals (s) ein Schwingkörper (2) elektromechanisch zu einer Schwingung angeregt wird und
- mittels eines nachfolgend von dem Schwingkörper () erzeugten Empfangssignals (e) das Sendesignal (s) für zumindest eine nachfolgende Anregung des Schwingkörpers (2) modifiziert wird,
**dadurch gekennzeichnet, dass**
- aus dem Empfangssignal (e) eine Eigenfrequenz (fe) des Schwingkörpers (2) oder eine von der Eigenfrequenz (fe) abhängige Größe (te) bestimmt wird und damit das Sendesignal (s) modifiziert wird.

2. Verfahren nach Anspruch 1, bei dem aus der Eigenfrequenz (fe) oder der von der Eigenfrequenz (fe) abhängigen Größe (te) eine neue Taktdauer eines Sendetakts (ts) oder eine neue Frequenz der Sendefrequenz des Sendesignals (s) bestimmt wird.

3. Verfahren nach Anspruch 1 oder 2, bei dem zum Bestimmen der Eigenfrequenz (fe) das während einer Sendepause des Sendesignals (s) gemessene Empfangssignal (e) verwendet wird.

4. Verfahren nach einem vorstehenden Anspruch, bei dem eine Sendefrequenz des Sendesignals (s) der Eigenfrequenz (fe) nachgeführt oder nachgeregelt wird.

5. Füllstand- oder Grenzstandmessgeräte-Schaltung mit
- einer Sendeschaltung (7), die zum Bereitstellen eines Sendesignals (s) geschaltet ist,
- einem Schalter (8), der zum wahlweisen Anlegen oder Nicht-Anlegen des Sendesignals (s) an zumindest einen Schwingkörperanschluss (5) geschaltet ist,
- einer Empfangsschaltung (7), die zum Abgreifen eines Empfangssignals (e) an den zumindest einen Schwingkörperanschluss (5) geschaltet ist und
- eine Modifizierungsschaltung, die zum Modifizieren des Sendesignals (s) abhängig von einem solchen zuvor empfangenen Empfangssignal (e) zwischen die Empfangsschaltung (6) und die Sendeschaltung (7) geschaltet ist,
**gekennzeichnet durch**
- eine Eigenschwingungs-Bestimmungsanordnung, die eine Eigenfrequenz (fe) eines anschließbaren Schwingkörpers (2) oder eine von der Eigenfrequenz (fe) abhängige Größe (te) aus dem Empfangssignal (e) bestimmt, und
- eine Sendesignal-Modifizierungsanordnung, die das Sendesignal (s) abhängig von der Eigenfrequenz (fe) oder von der von der Eigenfrequenz (fe) abhängigen Größe (te) modifiziert und bereitstellt.

6. Schaltung nach Anspruch 5, welche aus der Eigenfrequenz (fe) oder aus der von der Eigenfrequenz (fe) abhängigen Größe (te) eine neue Taktdauer eines Sendetakts (ts) oder eine neue Frequenz der Sendefrequenz des Sendesignals (s) bestimmt.

7. Schaltung nach Anspruch 5 oder 6, welche ausgelegt oder geschaltet ist, die Eigenfrequenz (fe) oder die von der Eigenfrequenz (fe) abhängige Größe (te) aus dem während einer Sendepause des Sendesignals (s) gemessenen Empfangssignal (e) zu bestimmen.

8. Schaltung nach einem der Ansprüche 5 - 7, die ausgelegt oder geschaltet ist, eine Sendefrequenz des Sendesignals (s) der Eigenfrequenz (fe) nachzuführen oder nachzuregeln.

9. Füllstand- oder Grenzstandmessgerät (1) mit
- einer Schaltung nach einem der Ansprüche 5 - 7 und
- einem an den Schwingkörperanschluss (5) angeschlossenen Schwingkörper (2).
